# EUROPEAN PATENT SPECIFICATION

(11) **EP 0 285 796 B1**
(45) Date of publication and mention of the grant of the patent: **16.06.1993**
(21) Application number: 88102887.2
(22) Date of filing: 26.02.1988
(51) Int. Cl.: G03B 3/10

(54) **Optical range finding system**
Optisches Entfernungsmessystem
Système optique de télémétrie

(30) Priority: 02.03.1987 US 20634
(43) Date of publication of application: 12.10.1988
(73) Proprietor: HONEYWELL INC., Minneapolis Minnesota 55408 (US)
(72) Inventor: Wilwerding, Dennis J., Littleton Colorado 80120 (US)
(74) Representative: Herzbach, Dieter, Dipl.-Ing.

(56) References cited:
- DE-A- 3 004 703
- US-A- 4 185 191
- US-A- 4 572 611
- PATENT ABSTRACTS OF JAPAN, vol. 4, no. 168 (P-37)[650], 20th November 1980; & JP - A - 55 115 006

## Description

The present invention relates to a camera according to the preamble of claim 1.

Such a camera is known from DE-A-3 004 703. In this system a plurality of tiny lenses (lenslets) are positioned behind the taking lens of a SLR camera so that an image of a remote object is formed on the lenslets. Each lenslet in turn forms an image of the exit pupil of the taking lens on a pair of detectors located therebehind. The pair of detectors are positioned and sized so that the image of the taking lens fully encompasses both detectors in the pair. It is preferable that the detectors fill as much of the image as possible so that they can receive as much energy as possible for best sensitivity. The pairs of detectors are also spaced apart so that the energy passing through one lenslet does not strike any other detectors than the pair directly underneath. Since the curvature changes between the lenslets, a blocking aperture material is positioned between each of the curved surfaces of the individual lenslets so as to block energy at those spots. The spacing between detector pairs is, however, limited by the desired overall size of the array and by the fact that necessary detail is lost and errors occur if the spacing is too great.

From JP-A-55-115006 (Patent Abstracts of Japan, Vol. 4, No. 168, 20th November 1980) it is already known to arrange light blocking means between adjacent detector lens/detector pair combinations so that in the case of irregular refraction incidence of light rays on neighboured detector pairs is prevented.

In SLR cameras it is often found desirable to utilize interchangeable lenses or zoom lenses having different f numbers (apertures) and it has been found difficult to provide a lenselet-detector combination which will operate through a large range of f numbers while still maintaining the proper sensitivity with reasonably large detector surfaces and without producing cross-over energy on adjacent detectors. As smaller f numbers (larger apertures) are encountered, the large apertures involved bring radiation into each lenselet at a greater angle with respect to the perpendicular and this eventually produces encroachment onto adjacent detector pairs. With larger f numbers, the smaller aperture creates a smaller image of the taking lens so that the pair of detectors cannot fit within the image without decreasing the surface area of the detectors and thus reducing sensitivity.

To date, no satisfactory solution has been found and present systems are limited to a small range of f numbers which limits the utility of the camera.

It is therefore the primary object of the present invention to devise a camera operating satisfactorily when used with taking lenses having a wide span of different apertures.

This object is achieved according to the characterizing features of claim 1.
FIGURE 1 shows a first arrangement of lenslets and detectors as found in the prior art system;
FIGURE 2 shows a modification of the fig. 1 embodiment to allow larger f number taking lenses; and
FIGURE 3 shows one arrangement of the lenslets and detectors as provided in the present invention.

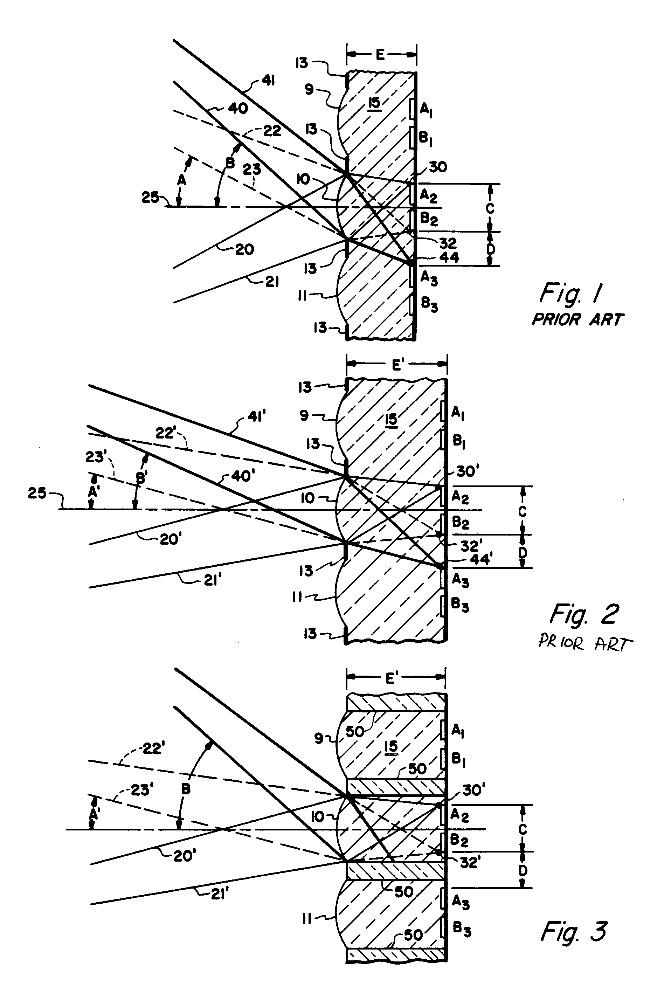

In FIGURE 1, three of the plurality of lenslets found in an autofocus detector array such as shown in DE-A-3 004 703 are identified by reference numerals 9, 10, and 11 respectively. A light blocking aperture material 13 is shown positioned between each of the curved surfaces of the individual lenslets so as to block energy that might strike between lenslets from passing further. Lenslets 9, 10, and 11 are formed in a block of transparent material 15 which is shown in FIGURE 1 having a depth "E". Positioned at the side of material 15 away from the lenslets and behind each lenslet are a pair of radiation sensitive detectors identified by letters "A" and "B". In FIGURE 1 detectors A1 and B1 are located behind lenslet 9, detectors A2 and B2 are located behind lenslet 10, and detectors A3 and B3 are located behind lenslet 11.

In FIGURE 1, the taking lens (not shown) transmits radiation to lenslet 10, for example, along paths such as solid lines 20 and 21 (from the lower portion of the taking lens) and dash lines 22 and 23 (from the upper portion of the taking lens). These rays are shown to converge slightly because they ultimately will meet at the edge of the taking lens, but for all practical purposes, the lines 20 and 21 are substantially parallel as are the lines 22 and 23 because in practice, the distance to the taking lens is very large compared to the size of the lenslets and detectors. For example, in one preferred embodiment, the lenslets are only about 195 µm in diameter while the distance to the taking lens is about 75,000 µm. Only the rays to lenslet 10 are shown in the drawings for simplicity, but it should be understood that similar rays impinge upon lenslets 9 and 11 and all other lenslets in the array.

The rays 20 and 21, 22 and 23 strike the lenslet 10 at an angle "A" with respect to the center line 25 thereof. For a given distance between the taking lens and the lenslets, the angle "A" depends on the aperture or f number of the taking lens.

Lenslet 10 operates on rays 20 and 21 to focus them at a point 30 which is shown in FIGURE 1 to be just on the upper edge of detector A2. Lenslet 10 also focuses rays 22 and 23 at a point 32 which is shown in FIGURE 1 just on the lower edge of detector B2. Thus, in FIGURE 1, the image of the exit pupil lies between points 30 and 32, identified as distance "C", and thus encompasses the entire area of the two detector pairs A2 and B2, as is desired. It should be noted that if a larger f number (smaller aperture) taking lens were employed, angle "A" would be smaller and accordingly the point 30 in FIGURE 1 would move downwardly while point 32 would move upwardly in which event the entire surface of A2 and B2 would not be enclosed within the image of such smaller aperture taking lens. This is undesirable since the detectors would then not respond properly to the image received and their output might be an erroneous signal to the autofocus system. Accordingly, in FIGURE 1, the angle "A" represents the minimum taking lens aperture permissible. Reducing the size or surface area is also undesirable since the sensivity is decreased. In the one preferred embodiment, the distance "C" was chosen to be about 90 µm.

Larger aperture (smaller f number) taking lenses can be accommodated within certain limits. Dark solid lines 40 and 41 represent lines of radiation which would exist with a larger aperture taking lens. These rays strike the lenslet 10 are focused to a point 44 which is shown in FIGURE 1 to be just on the upper edge of detector A3 (an adjacent detector with respect to lenslet 10). The angle that these rays make with the center line 25 of lenslet 10 is shown in FIGURE 1 as angle "B" and it is seen that if any larger aperture taking lens were utilized, angle "B" would be increased with the result that some of the energy passing through lenslet 10 from such larger taking lens would strike the adjacent detector A3. This is undesirable since the output of detector A3 would then not be indicative of the proper amount of radiation it was intended to receive from lenslet 11 and the signal to the autofocus system would be in error. Accordingly, in FIGURE 1, angle "B" represents the maximum taking lens aperture permissible. Of course, the distance "D" between the lower edge of detector B2 and the upper edge of detector A3 could be increased but the distribution of energy on the plane of the detectors would be sampled at more remote points which produces greater likelihood for error and the overall size of the array would have to be increased to keep the same number of detectors (which is costly), or the number of detectors decreased (which reduces accuracy). Accordingly, in the one preferred embodiment, the distance "D" was chosen to be about 90 µm (or substantially the same as distance "C"). Unfortunately, the range of permissible taking lens apertures represented by the difference between angles "A" and "B" is not sufficient for many desired lenses used in SLR cameras.

One way of accommodating larger f number taking lenses without reducing the size of the detectors, is shown in FIGURE 2. In FIGURE 2 the block of transparent material 15 has been made thicker as is shown by dimension "E'" and, as will be shown, this allows a smaller aperture lens to be employed while still producing an image of the exit pupil that entirely encompases the detectors A2 and B2. In FIGURE 2 the rays from opposite sides of the taking lens (not shown) are indicated by reference numerals 20' and 21' for the lower edge of the taking lens and by reference numerals 22' and 23' for the upper edge of the taking lens. It should be noted that the angle between the incoming rays and the center line 25 is now a smaller angle "A'" indicating that a smaller aperture taking lens is being employed. Lenslet 10 is now made of slightly different curvature so as to focus the rays 20' and 21' to a new point 30' shown in FIGURE 2 to be just on the upper edge of detector A2. Similarly, lenslet 10 focuses rays 22' and 23' to a point 32' shown in FIGURE 2 to be just on the lower edge of detector B2. Detectors A2 and B2 and the distance "C" are still the same size as in FIGURE 1 but the detectors are now located further from the lenslet 10. The result of increasing the thickness of material 15 is seen to be that the exit pupil of the now smaller taking lens again encompasses the entire surface of detectors A2 and B2 as is desired. Accordingly, with the arrangement of FIGURE 2, a larger f number lens may be employed than was the case in FIGURE 1. Unfortunately, however, increasing the distance between the lenslets and the detectors in FIGURE 2 not only reduces the minimum sized taking lens aperture, but also the maximum sized taking lens aperture. In FIGURE 2, the rays from a larger aperture taking lens are shown as solid dark lines 40' and 41' which are focused by lenslet 10 to a point 44' which is shown in FIGURE 2 to be just on the upper edge of detector A3 (the adjacent detector with respect to lenslet 10). Rays 40' and 41' make an angle B' with respect to center line 25 and it is seen that angle "B'" is considerably less than angle "B" of FIGURE 1. Therefore, the maximum sized aperture that can be employed with the arrangement of FIGURE 2 has undesirably decreased. Of course, as mentioned before, the distance "D" between the edges of adjacent pairs of detectors could be increased to eleviate this problem, but in so doing the overall size of the full detector array would have to be increased undesirably and radiation received by individual detector pair would be samples from more and more remote parts of the distribution pattern on the plane of the lenslets and thus the accuracy of the system would be adversely affected. Accordingly, it is desired to keep the detectors as close together as possible while still enabling them to handle a reasonably large number of taking lens f numbers.

In one preferred embodiment of the system, the distance E' was about 600 µm while, as previously mentioned, the distances C and D were both approximately 90 µm. With such an arrangement, the system was able to handle taking lenses having f numbers between f1.4 and f2.8. Such an arrangement is satisfactory for some SLR cameras but is not satisfactory for others. Accordingly, it is desired to be able to decrease the f number of the taking lens to encompass a more useful range of interchangeable or zoom lenses without causing the cross-over radiation problem.

In FIGURE 3, the material 15 is shown to have the same depth "Eʹ" as was the case in FIGURE 2 and the dimensions "C" and "D" are likewise the same. In FIGURE 3, however, instead of having the light blocking aperture 13 (or, if desired, in addition to aperture 13), an opaque barrier extending between the lenslets and the detector is shown for every lenslet-detector pair combination. Now, when the light rays 20ʹ and 21ʹ are focused at point 30ʹ, and light rays 22ʹ and 23ʹ are focused at point 32ʹ, as was the case in FIGURE 2, the detectors A2 and B2 are still entirely surrounded by the image of the taking lens which has the smaller aperture represented by the angle "Aʹ". The light rays 40 and 41 from a larger aperture taking lens are now shown in FIGURE 3 to be at the angle "B" as it was in FIGURE 1 which, were it not for the blocking material 50, would have continued on to cross-over and produce erroneous signals on detectors A3 and B3. However, now with the blocking material 50 between the lenslets, no unwanted radiation from lenslet 10 can strike adjacent detectors and the cross-over problem has been eliminated. It is seen that with the system in FIGURE 3, virtually any large size aperture can be accommodated while the smaller apertures are limited only by the distance between barriers 50. In other words, detectors A2 and B2 can now be made even larger so that the distance C is increased to the edges of the barriers, thus enabling even greater sensitivity while maintaining the same production alignment tolerances. If the image of the taking lens exit pupil becomes smaller than distance "C", then the distance "E" can be again increased. It is also desired that the barriers be non-reflecting or light absorbing so that no unwanted radiation is reflected back onto detector A2 and B2.

One method of producing the light blocking barriers 50 has been suggested by a Dow Corning technique described in US-A-4,572,611. In this procedure, the block of material 15 is subjected to a photolithographic process in which those areas where the opaque partition 50 is desired are exposed to radiation and then subject to a thermal cycle which causes the exposed material to shrink and become opaque. The shrinkage also has the effect of making the lenslets form between the partitions and accordingly the lenslet array is made in a simple straightforward fashion. Of course, other ways of placing the light absorbing partitions 50 between the lenslets will occur to those skilled in the art.

It is seen that it has been provided an improved system for lenslets and detectors useful in autofocus systems. Many modifications to the structure of the preferred embodiment will occur to those skilled in the art. For example, the barriers 50 need not necessarily extend all the way across the thickness of the material 15 but only so far as is necessary to block energy which would otherwise reach adjacent detectors.

## Claims

1. A camera comprising a taking lens forming an image of an object onto an image plane, and an optical range finding system, said system comprising:
a plurality of detector lenses (9,10,11) mounted proximate the image plane of the taking lens, each of the plurality of detector lenses being small in relation to the taking lens and being arranged to form a plurality of images of the exit pupil of the taking lens;
a plurality of pairs of detectors (A₁,B₁;A₂,B₂;A₃, B₃) mounted proximate the image plane of the detector lenses (9,10,11), each detector pair being positioned with respect to one of the detector lenses to form a plurality of adjacent detector lens/detector pair combinations; and
light blocking means (50) positioned between the adjacent detector lens/detector pair combinations (9,A₁,B₁;10,A₂,B₂;11,A₃, B₃) to prevent cross-over light rays from one of the detector lenses to the detector pairs of the adjacent combinations;
**characterized in that** the taking lens has a plurality of different apertures, each of the plurality of detector pairs (A₁,B₁;A₂,B₂; etc.) is sized to fit entirely within the image of the exit pupil of the smallest of the plurality of taking lens apertures and said light blocking means (50) become effective when a taking lens aperture other than the smallest aperture is used.

## Patentansprüche

1. Kamera mit einer Aufnahmelinse zur Abbildung eines Bildes eines Objektes in einer Bildebene und mit einem optischen Entfernungsmeßsystem, wobei das System umfaßt:
mehrere in der Nähe der Bildebene der Aufnahmelinse angeordnete Detektorlinsen (9, 10, 11), wobei jede der mehreren Detektorlinsen klein in bezug auf die Aufnahmelinse ist und diese so angeordnet sind, daß mehrere Bilder der Austrittspupille der Aufnahmelinse abgebildet werden;
mehrere in der Nähe der Bildebene der Detektorlinsen (9, 10, 11) angeordnete Detektorpaare (A₁, B₁; A₂, B₂; A₃, B₃), wobei jedes Detektorpaar in bezug auf eine der Detektorlinsen so angeordnet ist, daß mehrere benachbarte Detektorlinsen/Detektorpaar-Kombinationen gebildet werden; und
Licht-Blockiereinrichtungen (50), die zwischen benachbarten Detektorlinsen/Detektorpaar-Kombinationen (9, A₁, B₁; 10, A₂, B₂; 11, A₃, B₃) angeordnet sind, um sich überkreuzende Lichtstrahlen von einer der Detektorlinsen zu den Detektorpaaren benachbarter Kombinationen zu verhindern;
**dadurch gekennzeichnet,** daß die Aufnahmelinse mehrere unterschiedliche Blenden aufweist, jedes der mehreren Detektorpaare (A₁, B₁; A₂, B₂; usw.) so dimensioniert ist, daß es gänzlich in das Bild der Austrittspupille der kleinsten Blende der mehreren Aufnahmelinsenblenden paßt, und daß die Blockiereinrichtungen (50) wirksam werden, wenn eine Aufnahmelinse mit einer anderen Blende als die kleinste Blende benutzt wird.

## Revendications

1. Appareil photo comprenant un objectif de prise de vue formant une image d'un objet sur un plan image et un système de recherche de distance de prise de vue, ledit système comprenant :
une pluralité de lentilles de détecteur (9, 10, 11) montées à proximité du plan image de l'objectif de prise de vue, chacune de la pluralité de lentilles de détecteur étant de petite dimension par rapport à l'objectif de prise de vue et étant agencée de manière à former une pluralité d'images de la pupille de sortie de l'objectif de prise de vue;
une pluralité de paires de détecteurs (A₁, B₁; A₂, B₂; A₃, B₃) montées à proximité du plan image des lentilles de détecteur (9, 10, 11), chaque paire de détecteurs étant positionnée par rapport à l'une des lentilles de détecteur de manière à former une pluralité de combinaisons contigües lentille de détecteur/paire de détecteurs ; et
un moyen de blocage de lumière (50) positionné entre les combinaisons contigües lentille de détecteur/paire de détecteurs (9, A₁, B₁; 10, A₂, B₂; 11, A₃, B₃) afin d'empêcher le passage des rayons lumineux en provenance d'une des lentilles de détecteur sur les paires de détecteurs des combinaisons contigües ;
caractérisé en ce que l'objectif de prise de vue comporte une pluralité d'ouvertures différentes, chacune de la pluralité de paires de détecteurs (A₁,, B₁; A₂, B₂; et....) est dimensionnée de manière à s'adapter en totalité à l'intérieur de l'image de la pupille de sortie de la plus petite de la pluralité des ouvertures de l'objectif de prise de vue et ledit moyen de blocage de lumière (50) devient opérationnel lorsqu'une ouverture de l'objectif de prise de vue autre que la plus petite ouverture est utilisée.
